# EUROPEAN PATENT APPLICATION

(11) **EP 4 693 983 A1**
(43) Date of publication of application: **11.02.2026**
(21) Application number: 23929521.5
(22) Date of filing: 31.03.2023
(51) Int. Cl.: H04L 1/1829, H04L 1/1812

(54) **INDICATION METHOD FOR DISABLING HYBRID AUTOMATIC REPEAT REQUEST (HARQ) FEEDBACK, AND APPARATUS THEREFOR**

(71) Applicant: Beijing Xiaomi Mobile Software Co., Ltd., Beijing 100085 (CN)
(72) Inventor: ZHU, Yajun, Beijing 100085 (CN)
(74) Representative: Stöckeler, Ferdinand
(86) International application number: PCT/CN2023/085780
(87) International publication number: WO 2024/197938

(57) **Abstract**

Disclosed in embodiments of the present application are an indication method for disabling HARQ feedback, and an apparatus therefor, which can be applied to a communication system. The method comprises: receiving target signaling, and determining on the basis of information carried by the target signaling, state indication information; and determining, according to the state indication information, a HARQ feedback state of a target HARQ process used by scheduled PDSCH transmission. In the technical solution, whether HARQ feedback is performed in the target HARQ process used by the scheduled PDSCH transmission is indicated to a terminal device by means of the state indication information. When the target HARQ process is HARQ disabled, for the PDSCH transmission using the target HARQ process, the terminal device no longer performs HARQ feedback, such that the occurrence probability of HARO stalling can be reduced, and the transmission rate of the terminal device can thus be improved.

## Description

### TECHNICAL FIELD

The disclosure relates to the field of communication technology, and in particular to methods and apparatuses for indicating disabling a hybrid automatic repeat request (HARQ) feedback.

### BACKGROUND

Due to a significant latency of a satellite communication system, for some Internet of Things (IoT) devices, there may be a problem of hybrid automatic repeat request (HARQ) stalling, which reduces a transmission rate of a terminal. To avoid the problem of HARQ stalling in a non-terrestrial network (NTN) scenario, an HARQ disabled operation may be introduced. In other words, for an HARQ process, in a case where the HARQ disabled state is configured, the terminal may not perform any HARQ feedback for a physical downlink shared channel (PDSCH) transmission of the HARQ process.

### SUMMARY

Embodiments of the disclosure provide methods and apparatuses for indicating disabling a hybrid automatic repeat request (HARQ) feedback, applied in a field of communication to implement an indication of HARQ disabled for an HARQ process.

According to a first aspect, embodiments of the disclosure provide a method for indicating disabling an HARQ feedback, including:
receiving a target signaling, and determining state indication information based on information carried by the target signaling; and
determining an HARQ feedback state of a target HARQ process based on the state indication information.

In this technical solution, the state indication information may be determined based on the information carried by the target signaling, and the terminal is indicated via the state indication information, whether the HARQ feedback is performed in the target HARQ process used by a scheduled physical downlink shared channel (PDSCH) transmission. In a case where the HARQ feedback state of the target HARQ process is an HARQ disabled state, the terminal no longer performs any HARQ feedback for a PDSCH transmission using the target HARQ process, which may reduce the probability of occurrence of the HARQ stalling, thus improving a transmission rate of the terminal.

According to a second aspect, embodiments of the disclosure provide another method for indicating disabling an HARQ feedback, including:
sending a target signaling, where information carried by the target signaling is used for determining state indication information, and the state indication information is used for determining an HARQ feedback state of a target HARQ process.

According to a third aspect, embodiments of the disclosure provide a communication apparatus. The communication apparatus has some or all of functions of a network device in the method as described in above first aspect, such as functions of the communication apparatus may have some or all of functions in the disclosure, or may have functions of implementing any one of the embodiments of the disclosure independently. The functions may be realized by hardware, or by executing corresponding software by hardware. The hardware or software includes one or more units or modules corresponding to the above functions.

In an implementation, a structure of the communication apparatus may include a transceiver module and a processing module, where the processing module is configured to support the communication apparatus to perform corresponding functions in above method, and the transceiver module is configured to support communication between the communication apparatus and other devices. The communication apparatus may also include a storage module for coupling with the transceiver module and the processing module, where the storage module stores a computer program and data necessary for the communication apparatus.

As an example, the processing module may be a processor, the transceiver module may be a transceiver or a communication interface, and the storage module may be a memory.

According to a fourth aspect, embodiments of the disclosure provide another communication apparatus. The communication apparatus has some or all of functions of the terminal in the method as described in above second aspect, such as functions of the communication apparatus may have some or all of functions in the disclosure, or may have functions of implementing any one of the embodiments of the disclosure independently. The functions may be realized by hardware, or by executing corresponding software by hardware. The hardware or software includes one or more units or modules corresponding to the above functions.

In an implementation, a structure of the communication apparatus may include a transceiver module and a processing module, where the processing module is configured to support the communication apparatus to perform corresponding functions in above method, and the transceiver module is configured to support communication between the communication apparatus and other devices. The communication apparatus may also include a storage module for coupling with the transceiver module and the processing module, where the storage module stores a computer program and data necessary for the communication apparatus.

According to a fifth aspect, embodiments of the disclosure provide a communication device. The communication device includes a processor. When a computer program in a memory is called by the processor, the method as described in the above first aspect is implemented.

According to a sixth aspect, embodiments of the disclosure provide a communication device. The communication device includes a processor. When a computer program in a memory is called by the processor, the method as described in the above second aspect is implemented.

According to a seventh aspect, embodiments of the disclosure provide a communication device. The communication device includes a processor and a memory for storing a computer program. When the computer program stored in the memory is executed by the processor, the communication device is caused to implement the method in the above first aspect.

According to an eighth aspect, embodiments of the disclosure provide a communication device. The communication device includes a processor and a memory for storing a computer program. When the computer program stored in the memory is executed by the processor, the communication device is caused to implement the method in the above second aspect.

According to a ninth aspect, embodiments of the disclosure provide a communication device. The communication device includes a processor and an interface circuit, where the interface circuit is configured to receive code instructions and transmit the code instructions to the processor; and the processor is configured to run the code instructions to cause the communication device to implement the method in the above first aspect.

According to a tenth aspect, embodiments of the disclosure provide a communication device. The communication device includes a processor and an interface circuit, where the interface circuit is configured to receive code instructions and transmit the code instructions to the processor; and the processor is configured to run the code instructions to cause the communication device to implement the method in the above second aspect.

According to an eleventh aspect, embodiments of the disclosure provide a system for disabling HARQ feedback. The system includes the communication apparatus in the third aspect and the communication apparatus in the fourth aspect, or the communication device in the fifth aspect and the communication device in the sixth aspect, or the communication device in the seventh aspect and the communication device in the eighth aspect, or the communication device in the ninth aspect and the communication device in the tenth aspect.

According to a twelfth aspect, embodiments of the disclosure provide a computer-readable storage medium. The storage medium stores instructions used by the above network device. When the instructions are executed, the network device is caused to implement the method in the above first aspect.

According to a thirteenth aspect, embodiments of the disclosure provide a readable storage medium. The storage medium stores instructions used by the above terminal. When the instructions are executed, the terminal is caused to implement the method in the above second aspect.

According to a fourteenth aspect, embodiments of the disclosure provide a computer program product including a computer program. When the computer program is running on a computer, the computer is caused to implement the method in the above first aspect.

According to a fifteenth aspect, embodiments of the disclosure provide a computer program product including a computer program. When the computer program is running on a computer, the computer is caused to implement the method in the above second aspect.

According to a sixteenth aspect, embodiments of the disclosure provide a chip system. The chip system includes at least one processor and at least one interface, configured to support the network device to perform functions as described in the first aspect, for example, to determine or process at least one of data and information in above methods. In a possible design, the chip system also includes a memory for saving a computer program and data necessary for the network device. The chip system may include a chip, or a chip and other discrete devices.

According to a seventeenth aspect, embodiments of the disclosure provide a chip system. The chip system includes at least one processor and at least one interface, configured to support the terminal to perform functions as described in the second aspect, for example, to determine or process at least one of data and information in above methods. In a possible design, the chip system also includes a memory for saving a computer program and data necessary for the terminal. The chip system may include a chip, or a chip and other discrete devices.

According to an eighteenth aspect, embodiments of the disclosure provide a computer program. When the computer program is running on a computer, the computer is caused to implement the method in the above first aspect.

According to a nineteenth aspect, embodiments of the disclosure provide a computer program. When the computer program is running on a computer, the computer is caused to implement the method in the above second aspect.

### BRIEF DESCRIPTION OF THE DRAWINGS

In order to more clearly illustrate the technical solution in embodiments of the disclosure or the background, the accompanying drawings to be used in embodiments of the disclosure or the background are described below.
FIG. 1 is a schematic diagram illustrating an architecture of a communication system according to the embodiments of the disclosure.
FIG. 2 is a flowchart illustrating a method for indicating disabling a hybrid automatic repeat request (HARQ) feedback according to the embodiments of the disclosure.
FIG. 3 is a flowchart illustrating another method for indicating disabling an HARQ feedback according to the embodiments of the disclosure.
FIG. 4 is a flowchart illustrating another method for indicating disabling an HARQ feedback according to the embodiments of the disclosure.
FIG. 5 is a flowchart illustrating another method for indicating disabling an HARQ feedback according to the embodiments of the disclosure.
FIG. 6 is a flowchart illustrating another method for indicating disabling an HARQ feedback according to the embodiments of the disclosure.
FIG. 7 is a flowchart illustrating another method for indicating disabling an HARQ feedback according to the embodiments of the disclosure.
FIG. 8 is a flowchart illustrating another method for indicating disabling an HARQ feedback according to the embodiments of the disclosure.
FIG. 9 is a flowchart illustrating another method for indicating disabling an HARQ feedback according to the embodiments of the disclosure.
FIG. 10 is a flowchart illustrating another method for indicating disabling an HARQ feedback according to the embodiments of the disclosure.
FIG. 11 is a flowchart illustrating another method for indicating disabling an HARQ feedback according to the embodiments of the disclosure.
FIG. 12 is a flowchart illustrating another method for indicating disabling an HARQ feedback according to the embodiments of the disclosure.
FIG. 13 is a flowchart illustrating another method for indicating disabling an HARQ feedback according to the embodiments of the disclosure.
FIG. 14 is a flowchart illustrating another method for indicating disabling an HARQ feedback according to the embodiments of the disclosure.
FIG. 15 is a block diagram illustrating a communication apparatus according to the embodiments of the disclosure.
FIG. 16 is a block diagram illustrating a communication device according to the embodiments of the disclosure.
FIG. 17 is a block diagram illustrating a chip according to the embodiments of the disclosure.

### DETAILED DESCRIPTION

Reference is made in detail to example embodiments, examples of which are illustrated in the accompanying drawings. The following description refers to the accompanying drawings where same numbers in different accompanying drawings represent same or similar elements unless otherwise represented. The implementations set forth in the following description of example embodiments do not represent all implementations consistent with the disclosure. Instead, they are merely examples of apparatuses and methods consistent with aspects related to the disclosure as recited in the appended claims.

The terms used in embodiments of the disclosure are solely for the purpose of describing a particular embodiment and are not intended to limit embodiments of the disclosure. The terms "a/an" and "the" in a singular form used in embodiments and claims of the disclosure are also intended to include a plural form, unless the context clearly indicates other meaning. It may also be understood that the term "and/or" as used herein refers to any or all possible combinations of one or more associated listed items.

It may be understood that although the terms first, second, third, etc. may be used to describe various information in embodiments of the disclosure, such information should not be limited to these terms. These terms are used only to distinguish information in the same type from one another. For example, without departing from the scope of embodiments of the disclosure, first information may also be referred to as second information, and similarly, the second information may be referred to as the first information. Depending on the context, the word "if" used here may be interpreted as "when", "upon", or "in response to determining". For a purpose of brevity and ease of understanding, terms "greater than" or "less than", and "higher than" or "lower than" are used in the disclosure to represent a size relationship. However, for those skilled in the art, it may be understood that the term "greater than" also covers a meaning of "greater than or equal to" and the term "less than" also covers a meaning of "less than or equal to"; and the term "higher than" covers a meaning of "higher than or equal to", and the term "lower than" also covers a meaning of "lower than or equal to".

In order to better understand the methods for indicating disabling an HARQ feedback in the embodiments of the disclosure, the communication system applicable to the embodiments of the disclosure is first described as follows.

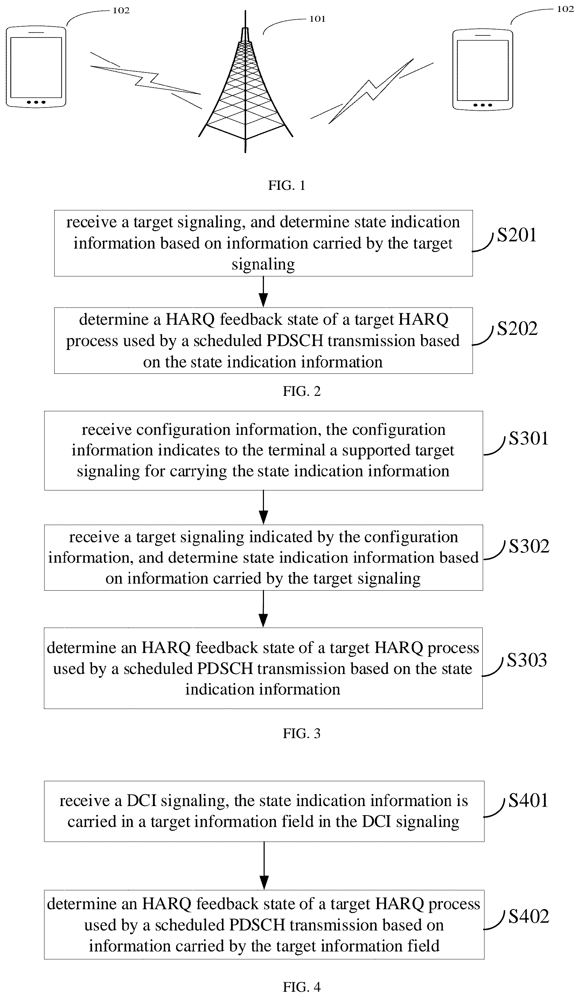

Please refer to FIG. 1, which is a schematic diagram illustrating an architecture of a communication system according to the embodiments of the disclosure. The communication system may include, but is not limited to, one network device and one terminal. The number and form of devices in FIG. 1 are only illustrated as an example, and do not constitute a limitation on the embodiments of the disclosure. The communication system may include two or more network devices and two or more terminals in a practical application. The communication system in FIG. 1 including one network device 101 and one terminal 102 is illustrated as an example.

It needs to be noted that the technical solution of the embodiments of the disclosure may be applied to various communication systems, for example, a 3th generation (3G) universal mobile telecommunications system (UMTS), a long term evolution (LTE) system, a 5th generation (5G) mobile communication system, a 5G new radio (NR) system, a 6th generation (6G) mobile communication system, or other new mobile communication systems in the future.

The network device 101 in the embodiments of the disclosure is an entity on a network side for sending or receiving signals. For example, the network device 101 may be an evolved NodeB (eNB), a transmission reception point (TRP), a next generation NodeB (gNB) in an NR system, a base station in other mobile communication system in the future, or an access node in a wireless fidelity (WiFi) system. The embodiments of the disclosure do not limit a specific technology and a specific device form used by the network device. The network device provided by the embodiments of the disclosure may be composed of a central unit (CU) and distributed units (DUs). The CU may also be referred to as a control unit. The use of CU-DU structure allows to divide a protocol layer of the network device, such as a base station, such that some of the protocol layer functions are placed in the CU for centralized control, and some or all of the remaining protocol layer functions are distributed in the DUs, and the DUs are centrally controlled by the CU.

The terminal 102 in the embodiments of the disclosure is an entity on a user side for receiving or sending signals, such as a mobile phone. The terminal may also be called a terminal, a user equipment (UE), a mobile station (MS), a mobile terminal (MT), etc. The terminal may be a car with a communication function, a smart car, a mobile phone, a wearable device, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, etc. The embodiments of the disclosure do not limit a specific technology and a specific device form used by the terminal.

It may be understood that the communication system in the embodiments of the disclosure is to more clearly illustrate the technical solution of the embodiments of the disclosure, and does not constitute a limitation on the technical solution in the embodiments of the disclosure. Those skilled in the art may know, with evolution of the system architecture and emergence of new service scenarios, the technical solution in the embodiments of the disclosure is also applicable to similar technical problems.

It needs to be noted that a method for indicating disabling an HARQ feedback in any one of embodiments of the disclosure may be performed independently, or in combination with possible implementations in other embodiments, or in combination with any one of technical solutions in the related arts.

The methods and the apparatuses for indicating disabling an HARQ feedback according to the disclosure are described in detail with reference to accompanying drawings.

Please refer to FIG. 2, which is a flowchart illustrating a method for indicating disabling an HARQ feedback according to the embodiments of the disclosure. The method for indicating disabling an HARQ feedback may be performed by a terminal. As illustrated in FIG. 2, the method may include but is not limited to the following.

At S201, a target signaling is received, and state indication information is determined based on information carried by the target signaling.

In some implementations, the target signaling may be a radio resource control (RRC) signaling, a medium-access-control control element (MAC CE) signaling, or a downlink control information (DCI) signaling.

In some implementations, the terminal may receive the target signaling sent by a network device. The target signaling carries state configuration information, and the state configuration information is used for determining the state indication information.

In some implementations, the terminal may receive the RRC signaling sent by the network device. The RRC signaling carries the state configuration information, and the state configuration information is used for determining the state indication information.

In one implementation, the terminal may receive the MAC CE signaling sent by the network device. The MAC CE signaling carries the state configuration information, and the state configuration information is used for determining the state indication information.

In some implementations, the terminal may receive the DCI signaling sent by the network device. Information carried by a target information field of the DCI signaling may be used for determining the state indication information.

For example, the target information field of the DCI signaling may be an original information field. The terminal may determine the state indication information via information carried by the original information field. The original information field for indicating the state indication information may be agreed by a protocol or preconfigured by a network.

For example, the target information field of the DCI signaling may be an additional information field. The terminal may determine the state indication information via information carried by the additional information field. The additional information field for indicating the state indication information may be agreed by the protocol.

For example, other information carried by the DCI signaling may be used for determining the state indication information. For example, the other information carried by the DCI signaling may be scrambling information of the DCI signaling, and the terminal may determine the state indication information based on the scrambling information of the DCI signaling.

In some implementations, the terminal may determine whether to obtain the state indication information based on the RRC signaling or based on the DCI signaling in accordance with a protocol agreement.

In some implementations, the terminal may also determine, based on an indication from the network device, to obtain the state indication information based on the RRC signaling, based on the MAC CE signaling, or based on the DCI signaling.

In the embodiments of the disclosure, the state indication information indicates to the terminal an HARQ feedback state of a target HARQ process. It needs to be noted that in the embodiments of the disclosure, the target HARQ process is an HARQ process used by a scheduled physical downlink shared channel (PDSCH) transmission.

At S202, an HARQ feedback state of a target HARQ process used by a scheduled PDSCH transmission is determined based on the state indication information.

In some implementations, the state indication information may be configured to indicate to the terminal that the HARQ feedback state of the target HARQ process is an HARQ enabled state. In a case where the HARQ feedback state of the target HARQ process is an HARQ enabled state, the terminal may send the HARQ feedback for the PDSCH transmission using the target HARQ process to the network device.

In some implementations, the HARQ feedback state of the target HARQ process is an HARQ disabled state. In a case where the HARQ feedback state of the target HARQ process is the HARQ disabled state, the terminal may not send any HARQ feedback for the PDSCH transmission using the target HARQ process to the network device.

In some implementations, the state indication information may explicitly indicate the HARQ feedback state of the target HARQ process. For example, a value "1" of the state indication information may indicate that the HARQ feedback state of the target HARQ process is an HARQ disabled state, or a value "0" of the state indication information may indicate that the HARQ feedback state of the target HARQ process is an HARQ disabled state.

In some implementations, the state indication information may implicitly indicate the HARQ feedback state of the target HARQ process. For example, the HARQ feedback state of the target HARQ process may be obtained through mapping based on information carried by a specific information field of the DCI signaling.

In some implementations, the terminal may determine a semi-statically configured HARQ feedback state of the target HARQ process based on the state indication information.

In some implementations, in a case where the terminal determines, based on the state indication information, that the target HARQ process used by the scheduled PDSCH transmission is an HARQ enabled state, the terminal may also determine transmission configuration information, such as the number of repetitions of the scheduled PDSCH transmission or an interval of the HARQ feedback, of the scheduled PDSCH transmission based on other configuration information.

In the embodiments of the disclosure, the state indication information may be determined based on the information carried by the target signaling, and the state indication information indicates to the terminal whether the HARQ feedback is performed in the target HARQ process used by the scheduled PDSCH transmission. In a case where the HARQ feedback state of the target HARQ process is an HARQ disabled state, the terminal no longer performs any HARQ feedback for the PDSCH transmission using the target HARQ process, which may reduce the probability of occurrence of the HARQ stalling, thus improving a transmission rate of the terminal.

Please refer to FIG. 3, which is a flowchart illustrating a method for indicating disabling an HARQ feedback according to the embodiments of the disclosure. The method for indicating disabling an HARQ feedback may be performed by a terminal. As illustrated in FIG. 3, the method may include but is not limited to the following.

At S301, configuration information is received, where the configuration information is configured to indicate to the terminal a supported target signaling for carrying the state indication information.

In some implementations, the configuration information may indicate one type of supported target signaling to the terminal or may simultaneously indicate a plurality of types of supported target signaling to the terminal. In the case of indicating one type of supported target signaling, the terminal may obtain the state indication information only via the type of supported target signaling. In the case of indicating the plurality of types of supported target signaling, the terminal may obtain the state indication information via any one of the plurality of types of supported target signaling.

In some implementations, in the case of indicating one type of supported target signaling, the target signaling may be the RRC signaling, the DCI signaling, or the MAC CE signaling. In the case of indicating the plurality of types of supported target signaling, the target signaling may include the RRC signaling, the MAC CE signaling, and the DCI signaling.

In some implementations, the supported target signaling may be indicated by two bits in the configuration information. For example, a value of two bits may be configured to indicate the supported target signaling. In a case where the value of two bits is "00", it may indicate to the terminal that the supported target signaling is the MAC CE signaling. In a case where the value of two bits is "01", it may indicate to the terminal that the supported target signaling is the RRC signaling. In a case where the value of two bits is "10", it may indicate to the terminal that the supported target signaling is the DCI signaling. In a case where the value of two bits is "11", it may indicate to the terminal that two supported target signalings are the RRC signaling and the DCI signaling.

At S302, a target signaling indicated by the configuration information is received, and state indication information is determined based on information carried by the target signaling.

In some implementations, in a case where the target signaling indicated by the configuration information is the RRC signaling, the terminal may receive the RRC signaling sent by the network device and determine the state indication information based on information carried by the RRC signaling. For example, the RRC signaling carries the state configuration information, and the state configuration information is used for determining the state indication information.

In some implementations, in a case where the target signaling indicated by the configuration information is the DCI signaling, the terminal may receive the DCI signaling sent by the network device and determine the state indication information based on information carried by the DCI signaling. For example, the target information field of the DCI signaling may be an original information field, and the terminal may determine the state indication information via information carried by the original information field. For example, the target information field of the DCI signaling may be an additional information field. The terminal may determine the state indication information via the information carried by the additional information field. For example, the terminal may determine the state indication information via other information carried by the DCI signaling. For example, the terminal may determine the state indication information based on scrambling information of the DCI signaling.

In some implementations, in a case where the target signaling indicated by the configuration information is the MAC CE signaling, the terminal may receive the MAC CE signaling sent by the network device and determine the state indication information based on information carried by the MAC CE signaling.

In some implementations, in a case where the target signaling indicated by the configuration information includes at least one of: the RRC signaling, the MAC CE signaling, or the DCI signaling, for example, the terminal may determine, based on a protocol agreement, whether to obtain the state indication information based on the RRC signaling, the DCI signaling, or the MAC CE signaling. For example, the terminal may also determine, based on a further indication from the network device, whether to obtain the state indication information based on the RRC signaling, the DCI signaling, or the MAC CE signaling.

In the embodiments of the disclosure, the state indication information is configured to indicate to the terminal an HARQ feedback state of a target HARQ process. It needs to be noted that in the embodiments of the disclosure, the target HARQ process is an HARQ process used by the scheduled PDSCH transmission.

At S303, an HARQ feedback state of a target HARQ process used by a scheduled PDSCH transmission is determined based on the state indication information.

In the embodiments of the disclosure, the state indication information is configured to indicate the HARQ feedback state of the target HARQ process to the terminal.

In some implementations, the state indication information may be configured to indicate to the terminal that the HARQ feedback state of the target HARQ process is an HARQ enabled state. In a case where the HARQ feedback state of the target HARQ process is the HARQ enabled state, the terminal may send, to the network device, an HARQ feedback for a PDSCH transmission using the target HARQ process.

In some implementations, the state indication information may be configured to indicate to the terminal that the HARQ feedback state of the target HARQ process is an HARQ disabled state. In a case where the HARQ feedback state of the target HARQ process is the HARQ disabled state, the terminal may not send, to the network device, the HARQ feedback of the PDSCH transmission using the target HARQ process.

In some implementations, the state indication information may explicitly indicate the HARQ feedback state of the target HARQ process.

In some implementations, the state indication information may implicitly indicate the HARQ feedback state of the target HARQ process.

In the embodiments of the disclosure, the state indication information may be determined based on the information carried by the target signaling, and the state indication information indicates to the terminal whether to perform an HARQ feedback for the target HARQ process used by the scheduled PDSCH transmission. In a case where the HARQ feedback state of the target HARQ process is an HARQ disabled state, the terminal no longer performs any HARQ feedback for the PDSCH transmission using the target HARQ process, which may reduce the probability of occurrence of the HARQ stalling, thus improving a transmission rate of the terminal.

Please refer to FIG. 4, which is a flowchart illustrating a method for indicating disabling an HARQ feedback according to the embodiments of the disclosure. The method for indicating disabling an HARQ feedback may be performed by a terminal. As illustrated in FIG. 4, the method may include but is not limited to the following.

At S401, a DCI signaling is received, where the state indication information is carried in a target information field of the DCI signaling.

In the embodiments of the disclosure, the state indication information is configured to indicate to the terminal the HARQ feedback state of the target HARQ process. It needs to be noted that, in the embodiments of the disclosure, the target HARQ process is an HARQ process used by the scheduled PDSCH transmission.

In some implementations, the state indication information may be carried in a target information field of the DCI signaling. For example, the information carried by the target information field may be a resource field feedback (or called ACK/NACK resource field) index value, that is to say, the ACK/NACK resource field index value carried by the target information field may be used as the state indication information. For example, the information carried by the target information field may be a repetition number index value of the PDSCH transmission, that is to say, the repetition number index value carried by the target information field may be used as the state indication information.

At S402, an HARQ feedback state of a target HARQ process used by a scheduled PDSCH transmission is determined based on information carried by the target information field.

In some implementations, a first mapping table between the ACK/NACK resource field index values and the HARQ feedback states is pre-established. The terminal may receive the DCI signaling and obtain a target ACK/NACK resource field index value from the target information field of the DCI signaling. Further, after obtaining the target ACK/NACK resource field index value, the terminal may look up the first mapping table with the target ACK/NACK resource field index value to determine the HARQ feedback state of the target HARQ process.

In some implementations, a second mapping table between repetition number index values of the PDSCH transmission and HARQ feedback states is pre-established. The terminal may receive the DCI signaling and obtain a target repetition number index value of a PDSCH transmission from the target information field of the DCI signaling. Further, after obtaining the target repetition number index value, the terminal may look up the second mapping table with the target repetition number index value to determine the HARQ feedback state of the target HARQ process.

In some implementations, the state indication information may be configured to indicate to the terminal that the HARQ feedback state of the target HARQ process is an HARQ enabled state. In a case where the HARQ feedback state of the target HARQ process is the HARQ enabled state, the terminal may feed back the HARQ feedback of the target HARQ process to the network device.

In some implementations, the state indication information may explicitly indicate the HARQ feedback state of the target HARQ process.

In some implementations, the state indication information may implicitly indicate the HARQ feedback state of the target HARQ process.

In the embodiments of the disclosure, based on the information carried by the target information field of the target signaling, the terminal may be indicated to determine whether to perform the HARQ feedback for the target HARQ process used by the scheduled PDSCH transmission. In a case where the HARQ feedback state of the target HARQ process is an HARQ disabled state, the terminal no longer performs the HARQ feedback for the PDSCH transmission using the target HARQ process, which may reduce the probability of occurrence of the HARQ stalling, thus improving a transmission rate of the terminal.

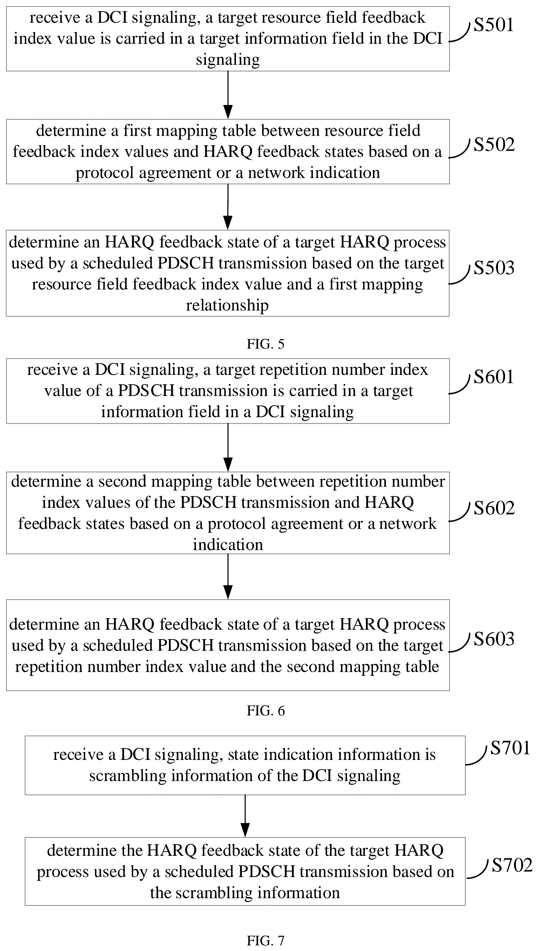

Please refer to FIG. 5, which is a flowchart illustrating a method for indicating disabling an HARQ feedback according to the embodiments of the disclosure. The method for indicating disabling an HARQ feedback may be performed by a terminal. As illustrated in FIG. 5, the method may include but is not limited to the following.

At S501, a DCI signaling is received, where a target resource field feedback index value is carried in a target information field of the DCI signaling.

In some implementations, the target resource field feedback index value carried in the target information field of the DCI signaling is configured to indicate the state indication information. In the embodiments of the disclosure, the state indication information is configured to indicate an HARQ feedback state of a target HARQ process to the terminal. It needs to be noted that, in the embodiments of the disclosure, the target HARQ process is an HARQ process used for a scheduled PDSCH transmission.

At S502, a first mapping table between resource field feedback index values and HARQ feedback states is determined based on a protocol agreement or a network indication.

In some implementations, the terminal may pre-establish the first mapping table between the resource field feedback index values and the HARQ feedback states based on the protocol agreement.

In some implementations, the terminal may determine the first mapping table between the resource field feedback index values and the HARQ feedback states based on the network indication. That is, the terminal may receive the first mapping table sent by the network device. For example, the terminal may receive configuration information of the first mapping table sent by the network device via an RRC signaling, and the terminal determines the first mapping table based on the configuration information.

At S503, an HARQ feedback state of a target HARQ process used by a scheduled PDSCH transmission is determined based on a target resource field feedback index value and the first mapping relationship.

In some implementations, after the target resource field feedback index value carried in the target information field is determined, the first mapping table between the resource field feedback index values and the HARQ feedback states is looked up to obtain the HARQ feedback state corresponding to the target resource field feedback index value, and a corresponding HARQ feedback state is determined as the HARQ feedback state of the target HARQ process. In a case where the HARQ feedback state corresponding to the target resource field feedback index value is an HARQ disabled state, it is determined that the HARQ feedback state of the target HARQ process is the HARQ disabled state. In a case where the HARQ feedback state corresponding to the target resource field feedback index value is an HARQ enabled state, it is determined that the HARQ feedback state of the target HARQ process is the HARQ enabled state.

In some implementations, the first mapping table between the resource field feedback index values and the HARQ feedback states may, for example, be as shown in Table 1.

| *ACK*/*NACK resource field* | HARQ feedback state |
|---|---|
| 0 | enabled |
| 1 | enabled |
| 2 | enabled |
| 3 | enabled |
| 4 | enabled |
| 5 | enabled |
| 6 | enabled |
| 7 | enabled |
| 8 | enabled |
| 9 | enabled |
| 10 | enabled |
| 11 | enabled |
| 12 | enabled |
| 13 | enabled |
| 14 | enabled |
| 15 | disabled |

It may be understood that each element in Table 1 exists independently. These elements are listed in the same table, but this does not mean that all elements in the table should exist simultaneously as shown in the table. The value of each element does not depend on the value of any other element in Table 1. Therefore, those skilled in the art may understand that the value of each element in Table 1 is an independent embodiment.

For example, in a case where the terminal obtains that an "ACK/NACK resource field" index value indicated by the target information field of the DCI is "15", based on Table 1, it may be determined that the HARQ feedback state corresponding to the "ACK/NACK resource field" index value being "15" is an HARQ disabled state, and thus it may be determined that the HARQ feedback state of the target HARQ process corresponding to a currently scheduled PDSCH transmission is the HARQ disabled state. In a case where the terminal obtains that the "ACK/NACK resource field" index value indicated by the target information field of the DCI is a value other than "15", for example, in a case where the indicated "ACK/NACK resource field" index value is "1", based on Table 1, it may be determined that the HARQ feedback state corresponding to the "ACK/NACK resource field" index value being "1" is an HARQ enabled state, and thus it may be determined that the HARQ feedback state of the target HARQ process corresponding to the currently scheduled PDSCH transmission is the HARQ enabled state.

In some implementations, the HARQ feedback state may be added to an existing HARQ transmission indication configuration table, so that the HARQ transmission indication configuration table may reflect a mapping relationship between the resource field feedback index values and the HARQ feedback states, as shown in Table 2:

| *ACK*/*NACK resource field* | *ACK*/*NACK subcarrier* | *k*₀ | HARQ feedback state |
|---|---|---|---|
| 0 | 0 | 13 | enabled |
| 1 | 1 | 13 | enabled |
| 2 | 2 | 13 | enabled |
| 3 | 3 | 13 | enabled |
| 4 | 0 | 15 | enabled |
| 5 | 1 | 15 | enabled |
| 6 | 2 | 15 | enabled |
| 7 | 3 | 15 | enabled |
| 8 | 0 | 17 | enabled |
| 9 | 1 | 17 | enabled |
| 10 | 2 | 17 | enabled |
| 11 | 3 | 17 | enabled |
| 12 | 0 | 18 | enabled |
| 13 | 1 | 18 | enabled |
| 14 | 2 | 18 | enabled |
| 15 | Reserved | Reserved | disabled |

It may be understood that each element in Table 2 exists independently. These elements are listed in the same table, but this does not mean that all elements in the table should exist simultaneously as shown in the table. The value of each element does not depend on the value of any other element in Table 2. Therefore, those skilled in the art may understand that the value of each element in Table 2 is an independent embodiment.

In some implementations, in a case where the terminal determines that the HARQ feedback state of the target HARQ process corresponding to the currently scheduled PDSCH transmission is an HARQ enabled state, the terminal may further determine other transmission configuration information of the target HARQ process. The other transmission configuration information may include a repetition number of the PDSCH transmission corresponding to the target HARQ process, an interval between a time-domain position of HARQ feedback of the target HARQ process and a time-domain position where the PDSCH transmission ends, or the like.

For example, the terminal may determine the interval between the time-domain position of the HARQ feedback of the target HARQ process and the time-domain position where the PDSCH transmission ends. As shown in Table 2, a corresponding k0 may be determined based on the resource field feedback index value, a value indicated by k0 may be determined as the interval between the time-domain position of the HARQ feedback and the time-domain position where the PDSCH transmission ends.

In the embodiments of the disclosure, a target resource field feedback index value carried in the DCI may be reused to indicate the HARQ feedback state of the target HARQ process to the terminal. In a case where the HARQ feedback state of the target HARQ process is an HARQ disabled state, the terminal no longer performs any HARQ feedback for the PDSCH transmission using the target HARQ process, which may reduce the probability of occurrence of the HARQ stalling, thus improving a transmission rate of the terminal.

Please refer to FIG. 6, which is a flowchart illustrating a method for indicating disabling an HARQ feedback according to the embodiments of the disclosure. The method for indicating disabling an HARQ feedback may be performed by a terminal. As illustrated in FIG. 6, the method may include but is not limited to the following.

At S601, a DCI signaling is received, where a target repetition number index value of a PDSCH transmission is carried in a target information field in a DCI signaling.

In some implementations, the repetition number index value carried in the target information field of the DCI signaling is configured to indicate the state indication information. In the embodiments of the disclosure, the state indication information is configured to indicate an HARQ feedback state of the target HARQ process to the terminal. It needs to be noted that, in the embodiments of the disclosure, the target HARQ process is an HARQ process used for the scheduled PDSCH transmission.

At S602, a second mapping table between repetition number index values of the PDSCH transmission and HARQ feedback states is determined based on a protocol agreement or a network indication.

In some implementations, the terminal may pre-establish the second mapping table between the repetition number index values of the PDSCH transmission and the HARQ feedback states based on the protocol agreement.

In some implementations, the terminal may determine the second mapping table between the repetition number index values of the PDSCH transmission and the HARQ feedback states based on the network indication. That is, the terminal may receive the second mapping table sent by the network device. For example, the terminal may receive configuration information of the second mapping table sent by the network device via an RRC signaling, and the terminal determines the second mapping table based on the configuration information.

At S603, an HARQ feedback state of a target HARQ process used by a scheduled PDSCH transmission is determined based on the target repetition number index value and the second mapping table.

In some implementations, after the target repetition number index value carried in the target information field is determined, the second mapping table between the repetition number index values of the PDSCH transmission and the HARQ feedback states is queried to obtain the HARQ feedback state corresponding to the target repetition number index value, and the corresponding HARQ feedback state is determined as the HARQ feedback state of the target HARQ process. In a case where the HARQ feedback state corresponding to the target repetition number index value is an HARQ disabled state, it is determined that the HARQ feedback state of the target HARQ process is the HARQ disabled state. In a case where the HARQ feedback state corresponding to the target repetition number index value is an HARQ enabled state, it is determined that the HARQ feedback state of the target HARQ process is the HARQ enabled state.

In some implementations, the second mapping table between the repetition number index values and the HARQ feedback states may, for example, be as shown in Table 3:

| *Repetition number* index | HARQ feedback state |
|---|---|
| 0 | disabled |
| 1 | enabled |
| 2 | enabled |
| 3 | enabled |
| 4 | enabled |
| 5 | enabled |
| 6 | enabled |
| 7 | enabled |
| 8 | enabled |
| 9 | enabled |
| 10 | enabled |
| 11 | enabled |
| 12 | enabled |
| 13 | enabled |
| 14 | enabled |
| 15 | enabled |

It may be understood that each element in Table 3 exists independently. These elements are listed in the same table, but this does not mean that all elements in the table should exist simultaneously as shown in the table. The value of each element does not depend on the value of any other element in Table 3. Therefore, those skilled in the art may understand that the value of each element in Table 1 is an independent embodiment.

For example, in a case where the terminal obtains that a "repetition number" index value indicated in a target information field of the DCI is "0", based on Table 3, it may be determined that an HARQ feedback state corresponding to the "repetition number" index value of "0" is an HARQ disabled state, and thus it may be determined that the HARQ feedback state of a target HARQ process corresponding to a currently scheduled PDSCH transmission is the HARQ disabled state. In a case where the terminal obtains that the "repetition number" index value indicated in the target information field of the DCI is a value other than "0", for example, in a case where the indicated "ACK/NACK resource field" index value is "1", based on Table 3, it may be determined that an HARQ feedback state corresponding to the "repetition number" index value being "1" is an HARQ enabled state, and thus it may be determined that the HARQ feedback state of the target HARQ process corresponding to the currently scheduled PDSCH transmission is the HARQ enabled state.

In some implementations, the HARQ feedback state may be added to an existing repetition number indication configuration table, so that the repetition number indication configuration table may reflect a mapping relationship between the repetition number index values and the HARQ feedback states, as shown in Table 4:

| *Repetition number* index | *Repetition number* | HARQ feedback state |
|---|---|---|
| 0 | Reserved | disabled |
| 1 | 2 | enabled |
| 2 | 4 | enabled |
| 3 | 8 | enabled |
| 4 | 16 | enabled |
| 5 | 32 | enabled |
| 6 | 64 | enabled |
| 7 | 128 | enabled |
| 8 | 192 | enabled |
| 9 | 256 | enabled |
| 10 | 384 | enabled |
| 11 | 512 | enabled |
| 12 | 768 | enabled |
| 13 | 1024 | enabled |
| 14 | 1536 | enabled |
| 15 | 2048 | enabled |

It may be understood that each element in Table 4 exists independently. These elements are listed in the same table, but this does not mean that all elements in the table should exist simultaneously as shown in the table. The value of each element does not depend on the value of any other element in Table 4. Therefore, those skilled in the art may understand that the value of each element in Table 4 is an independent embodiment.

In some implementations, in a case where the terminal determines that the HARQ feedback state of the target HARQ process corresponding to the currently scheduled PDSCH transmission is an HARQ enabled state, the terminal may further determine other transmission configuration information of the target HARQ process. The other transmission configuration information may include a repetition number of the PDSCH transmission corresponding to the target HARQ process, an interval between a time-domain position of HARQ feedback of the target HARQ process and a time-domain position where the PDSCH transmission ends, and on the like.

For example, the terminal may determine a target repetition number of the PDSCH transmission corresponding to the target HARQ process. As shown in Table 4, the target repetition number of the PDSCH transmission may be further determined based on the target repetition number index value, and a repetition number corresponding to the target repetition number index value is determined as the target repetition number of the PDSCH transmission.

In the embodiments of the disclosure, the target repetition number index value carried in the DCI may be reused to indicate the HARQ feedback state of the target HARQ process to the terminal. In a case where the HARQ feedback state of the target HARQ process is an HARQ disabled state, the terminal no longer performs any HARQ feedback for the PDSCH transmission using the target HARQ process, which may reduce the probability of occurrence of the HARQ stalling, thus improving a transmission rate of the terminal.

Please refer to FIG. 7, which is a flowchart illustrating a method for indicating disabling an HARQ feedback according to the embodiments of the disclosure. The method for indicating disabling an HARQ feedback may be performed by a terminal. As illustrated in FIG. 7, the method may include but is not limited to the following.

At S701, a DCI signaling is received, where state indication information is scrambling information of the DCI signaling.

At S702, the HARQ feedback state of the target HARQ process used by a scheduled PDSCH transmission is determined based on the scrambling information.

In the embodiments of the disclosure, the state indication information is configured to indicate the HARQ feedback state of the target HARQ process to the terminal. It needs to be noted that, in the embodiments of the disclosure, the target HARQ process is an HARQ process used by the scheduled PDSCH transmission.

In some implementations, a target scrambling sequence of the DCI signaling is determined based on the scrambling information, and further, the HARQ feedback state of the target HARQ process is determined based on the target scrambling sequence and a mapping relationship between scrambling sequences and HARQ feedback states.

In the embodiments of the disclosure, the terminal may detect the scrambling information of the DCI signaling for indicating the state indication information to obtain the scrambling information of the DCI signaling and may parse the scrambling information to obtain the target scrambling sequence. For example, a cyclic redundancy check (CRC) code of the signaling is scrambled with the scrambling information of the DCI signaling may be scrambled on, such that the terminal may obtain the target scrambling sequence from the CRC code.

Furthermore, the third mapping table between the scrambling sequences and the HARQ feedback states may be predetermined. After obtaining the target scrambling sequence, the third mapping table is looked up to obtain an HARQ feedback state that has a mapping relationship with the target scrambling sequence, to obtain the HARQ feedback state of the target HARQ process. For example, the third mapping table between the scrambling sequences and the HARQ feedback states may be predefined, or may be determined based on a signaling carrying the third mapping table received by the terminal from the network device.

For example, the mapping relationship between the scrambling sequences and the HARQ feedback states includes: a scrambling sequence 1 is mapped to the HARQ feedback state of the target HARQ process being an HARQ enabled state, and a scrambling sequence 2 is mapped to the HARQ feedback state of the target HARQ process being an HARQ disabled state. That is to say, the scrambling sequence 1 represents that the HARQ feedback state of the target HARQ process is the HARQ enabled state, and the scrambling sequence 2 represents that the HARQ feedback state of the target HARQ process is the HARQ disabled state.

In a case where the terminal determines that the target scrambling sequence of the DCI signaling is the scrambling sequence 1, it is determined that the HARQ feedback state of the target HARQ process is an HARQ enabled state. In a case where the terminal determines that the target scrambling sequence of the DCI signaling is the scrambling sequence 2, it is determined that the HARQ feedback state of the target HARQ process is an HARQ disabled state.

In the embodiments of the disclosure, the HARQ feedback state of the target HARQ process may be indicated to the terminal based on the scrambling information of the DCI signaling. In a case where the HARQ feedback state of the target HARQ process is an HARQ disabled state, the terminal no longer performs any HARQ feedback for the PDSCH transmission using the target HARQ process, which may reduce the probability of occurrence of the HARQ stalling, thus improving a transmission rate of the terminal.

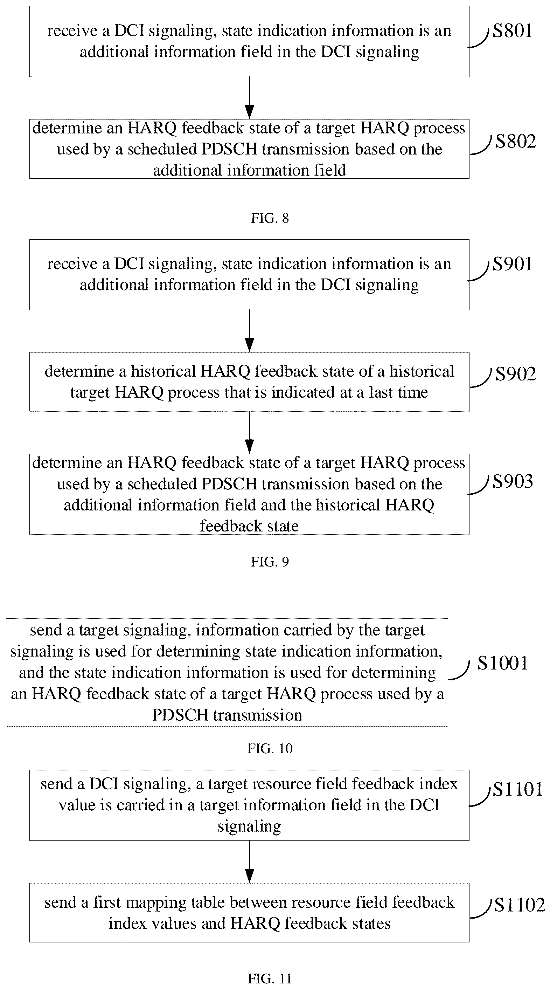

Please refer to FIG. 8, which is a flowchart illustrating a method for indicating disabling an HARQ feedback according to the embodiments of the disclosure. The method for indicating disabling an HARQ feedback may be performed by a terminal. As illustrated in FIG. 8, the method may include but is not limited to the following.

At S801, a DCI signaling is received, where state indication information is an additional information field of the DCI signaling.

In the embodiments of the disclosure, the state indication information is configured to indicate an HARQ feedback state of a target HARQ process to the terminal. It needs to be noted that, in the embodiments of the disclosure, the target HARQ process is an HARQ process used by a scheduled PDSCH transmission.

In some implementations, an additional information field may be added to the DCI signaling, and the additional information field may be used as the state indication information.

At S802, an HARQ feedback state of a target HARQ process used by a scheduled PDSCH transmission is determined based on the additional information field.

In some implementations, in a case where the additional information field indicates a first value, it is determined that the HARQ feedback state of the target HARQ process is an HARQ enabled state. In a case where the additional information field indicates a second value, it is determined that the HARQ feedback state of the target HARQ process is an HARQ disabled state. In this implementation, the HARQ feedback state of the target HARQ process may be explicitly indicated to the terminal via the additional information field.

For example, the additional information field may be 1 bit, and the 1 bit may be used as the state indication information. In a case where the additional information field indicates "1", it may be determined that the HARQ feedback state of the target HARQ process used by the scheduled PDSCH transmission is the HARQ enabled state. In a case where the additional information field indicates "0", it may be determined that the HARQ feedback state of the target HARQ process used by the scheduled PDSCH transmission is the HARQ disabled state.

In some implementations, the HARQ feedback state of the target HARQ process may be implicitly determined based on an indication of the additional information field. For example, the indication of the additional information field may be configured to indicate whether to change an HARQ feedback state of the target HARQ process that is indicated at a last time. In the embodiments of the disclosure, the HARQ feedback state of the target HARQ process may be determined based on the indication of the additional information field and the HARQ feedback state of the target HARQ process that is indicated at a last time.

In the embodiments of the disclosure, the HARQ feedback state of the target HARQ process may be indicated to the terminal based on the additional information field of the DCI signaling. In a case where the HARQ feedback state of the target HARQ process is the HARQ disabled state, the terminal no longer performs any HARQ feedback for the PDSCH transmission using the target HARQ process, which may reduce the probability of occurrence of the HARQ stalling, thus improving a transmission rate of the terminal.

Please refer to FIG. 9, which is a flowchart illustrating a method for indicating disabling an HARQ feedback according to the embodiments of the disclosure. The method for indicating disabling an HARQ feedback may be performed by a terminal. As illustrated in FIG. 9, the method may include but is not limited to the following.

At S901, a DCI signaling is received, where state indication information is an additional information field of the DCI signaling.

In the embodiments of the disclosure, the state indication information is configured to indicate the HARQ feedback state of a target HARQ process to the terminal. It needs to be noted that, in the embodiments of the disclosure, the target HARQ process is an HARQ process used by the scheduled PDSCH transmission.

In some implementations, a new information field may be added to the DCI signaling, and the additional information field may be used as the state indication information.

At S902, a historical HARQ feedback state of a historical target HARQ process that is indicated at a last time is determined.

At S903, an HARQ feedback state of a target HARQ process used by a scheduled PDSCH transmission is determined based on the additional information field and the historical HARQ feedback state.

In the embodiments of the disclosure, the target HARQ process that is indicated at a last time is referred to as the historical target HARQ process, and an HARQ feedback state of the historical target HARQ process is referred to as the historical HARQ feedback state.

In some implementations, in a case where the additional information field indicates to change the historical HARQ feedback state of the historical target HARQ process, it is determined that the HARQ feedback state of the target HARQ process is opposite to the historical HARQ feedback state. It may be understood that in a case where the historical HARQ feedback state of the historical target HARQ process is the HARQ enabled state, it is determined that the HARQ feedback state of the target HARQ process is the HARQ disabled state. In a case where the historical HARQ feedback state of the historical target HARQ process is the HARQ disabled state, it is determined that the HARQ feedback state of the target HARQ process is the HARQ enabled state.

In some implementations, in a case where the additional information field indicates not to change the historical HARQ feedback state of the historical target HARQ process, it is determined that the HARQ feedback state of the target HARQ process is the same as the historical HARQ feedback state. It may be understood that in a case where the historical HARQ feedback state of the historical target HARQ process is an HARQ enabled state, it is determined that the HARQ feedback state of the target HARQ process is the HARQ enabled state. In a case where the historical HARQ feedback state of the historical target HARQ process is the HARQ disabled state, it is determined that the HARQ feedback state of the target HARQ process is the HARQ disabled state.

For example, the additional information field may be 1 bit, and the 1 bit may indicate whether to change the historical HARQ feedback state of the historical target HARQ process. In a case where the additional information field indicates "1", it may indicate to change the historical HARQ feedback state. In a case where the additional information field indicates "0", it may indicate not to change the historical HARQ feedback state.

It needs to be noted that in a case where no historical target HARQ process that is indicated at a last time is present before the target HARQ process, that is, in a case where the target HARQ process is an HARQ process indicated at a first time, the terminal may use a default HARQ feedback state as the historical HARQ feedback state. The default HARQ feedback state may be the HARQ enabled state or the HARQ disabled state. The default HARQ feedback state may be agreed based on a protocol or configured by receiving a configuration from the network device.

In the embodiments of the disclosure, the HARQ feedback state of the target HARQ process may be implicitly indicated to the terminal based on the additional information field of the DCI signaling. In a case where the HARQ feedback state of the target HARQ process is the HARQ disabled state, the terminal no longer performs any HARQ feedback for the PDSCH transmission using the target HARQ process, which may reduce the probability of occurrence of the HARQ stalling, thus improving a transmission rate of the terminal.

Please refer to FIG. 10, which is a flowchart illustrating a method for indicating disabling an HARQ feedback according to the embodiments of the disclosure. The method for indicating disabling an HARQ feedback may be performed by a network device. As illustrated in FIG. 10, the method may include but is not limited to the following.

At S1001, a target signaling is sent, where information carried by the target signaling is used for determining state indication information, and the state indication information is used for determining an HARQ feedback state of a target HARQ process used by a scheduled PDSCH transmission.

In some implementations, the target signaling may be an RRC signaling, an MAC CE signaling, or a DCI signaling.

In some implementations, the network device may send a target signaling to the terminal, where the target signaling carries state configuration information, and the state configuration information is used for determining state indication information.

In some implementations, the network device may send the RRC signaling to the terminal, where the RRC signaling carries state configuration information, and the state configuration information is used for determining state indication information.

The network device may send the MAC CE signaling to the terminal, where the MAC CE signaling carries state configuration information, and the state configuration information is used for determining state indication information.

In some implementations, the network device may send the DCI signaling to the terminal, where information carried by a target information field in the DCI signaling is configured to indicate the state indication information.

For example, the target information field in the DCI signaling may be an original information field, and the terminal may determine the state indication information via information carried by the original information field. The original information field for indicating the state indication information may be agreed based on a protocol or pre-configured by a network.

For example, the target information field of the DCI signaling may be an additional information field. The terminal may determine the state indication information via information carried by the additional information field. The additional information field for indicating the state indication information may be agreed based on a protocol.

For example, other information carried by the DCI signaling may be used as the state indication information. For example, the other information carried by the DCI signaling may be scrambling information of the DCI signaling, and the scrambling information of the DCI signaling may be used as the state indication information.

In some implementations, it may be determined, based on a protocol agreement, whether to obtain the state indication information based on the RRC signaling or based on the DCI signaling.

In some implementations, the network device may also indicate to the terminal whether to obtain the state indication information based on the RRC signaling or based on the DCI signaling.

In some implementations, the network device may also indicate to the terminal whether to obtain the state indication information based on the RRC signaling, based on the MAC CE signaling, or based on the DCI signaling.

In the embodiments of the disclosure, the state indication information is configured to indicate the HARQ feedback state of the target HARQ process to the terminal. It needs to be noted that, in the embodiments of the disclosure, the target HARQ process is an HARQ process used for a scheduled PDSCH transmission.

In some implementations, configuration information is sent to the terminal, where the configuration information is configured to indicate to a terminal a supported target signaling for carrying the state indication information, and the target signaling includes at least one of: an RRC signaling, an MAC CE signaling, or a DCI signaling.

In some implementations, the configuration information may indicate one supported target signaling to the terminal or may indicate a plurality of supported target signaling simultaneously to the terminal. In a case where one supported target signaling is indicated, the terminal obtains the state indication information only via the supported target signaling. In a case where a plurality of supported target signaling are indicated, the terminal may obtain the state indication information via any one of the plurality of supported target signaling.

In some implementations, in a case where one supported target signaling is indicated, the target signaling may be the RRC signaling, the DCI signaling, or the MAC CE signaling. In a case where a plurality of supported target signaling are indicated, the plurality of target signaling may include the RRC signaling, the MAC CE signaling, and the DCI signaling.

In some implementations, two bits in the configuration information may be configured to indicate the supported target signaling. For example, a value of the two bits may be configured to indicate the supported target signaling. In a case where the value of the two bits is "00", the terminal is indicated that the supported target signaling is the MAC CE signaling. In a case where the value of the two bits is "01", the terminal is indicated that the supported target signaling is the RRC signaling_{∘} In a case where the value of the two bits is "10", the terminal may be indicated that the supported target signaling is the DCI signaling. In a case where the value of the two bits is "11", the terminal is indicated that the two supported target signaling are the RRC signaling and the DCI signaling.

In some implementations, in a case where the target signaling indicated by the configuration information is the RRC signaling, the network device may send the RRC signaling to the terminal, and the terminal determines the state indication information based on information carried by the RRC signaling.

In some implementations, in a case where the target signaling indicated by the configuration information is the MAC CE signaling, the network device may send the MAC CE signaling to the terminal, and the terminal determines the state indication information based on information carried by the MAC CE signaling.

In some implementations, in a case where the target signaling indicated by the configuration information is the DCI signaling, the network device may send the DCI signaling to the terminal, and the terminal determines the state indication information based on information carried by the DCI signaling.

In some implementations, in a case where the target signaling indicated by the configuration information includes at least one of the RRC signaling, the MAC CE signaling or the DCI signaling, for example, the terminal may determine whether to obtain the state indication information based on the RRC signaling, based on the MAC CE signaling, or based on the DCI signaling, based on the protocol agreement. For example, the terminal may also determine, based on a further indication from the network device, whether to obtain the state indication information based on the RRC signaling, based on the MAC CE signaling, or based on the DCI signaling.

In the embodiments of the disclosure, the state indication information is configured to indicate the HARQ feedback state of the target HARQ process to the terminal. It needs to be noted that, in the embodiments of the disclosure, the target HARQ process is an HARQ process used by the scheduled PDSCH transmission.

In some implementations, the state indication information may be configured to indicate to the terminal that the HARQ feedback state of the target HARQ process is an HARQ enabled state. In a case where the HARQ feedback state of the target HARQ process is the HARQ enabled state, the network device may receive the HARQ feedback for the PDSCH transmission using the target HARQ process sent by the terminal.

In some implementations, in a case where the HARQ feedback state of the target HARQ process is the HARQ disabled state, the network device does not receive any HARQ feedback for the PDSCH transmission using the target HARQ process sent by the terminal.

In some implementations, the state indication information may explicitly indicate the HARQ feedback state of the target HARQ process.

In some implementations, the state indication information may implicitly indicate the HARQ feedback state of the target HARQ process.

In the embodiments of the disclosure, the state indication information may be determined based on information carried by the target signaling, and the state indication information indicates to the terminal whether to perform the HARQ feedback for the target HARQ process used by the scheduled PDSCH transmission. In a case where the HARQ feedback state of the target HARQ process is the HARQ disabled state, the terminal does not send any HARQ feedback for the PDSCH transmission of the target HARQ process to the network device, which may reduce the probability of occurrence of the HARQ stalling, thus improving a transmission rate of the terminal.

Please refer to FIG. 11, which is a flowchart illustrating a method for indicating disabling an HARQ feedback according to the embodiments of the disclosure. The method for indicating disabling an HARQ feedback may be performed by a network device. As illustrated in FIG. 11, the method may include but is not limited to the following.

At S1101, a DCI signaling is sent, where a target resource field feedback index value is carried in a target information field of the DCI signaling.

At S1102, a first mapping table between resource field feedback index values and HARQ feedback states is sent.

In some implementations, the network device may send the first mapping table between the resource field feedback index values and the HARQ feedback states to the terminal. For example, the network device may send configuration information of the first mapping table to the terminal via an RRC signaling, such that the terminal determines the first mapping table based on the configuration information.

In some implementations, after the target resource field feedback index value carried in the target information field is determined, the first mapping table between the resource field feedback index values and the HARQ feedback states is looked up to obtain an HARQ feedback state corresponding to the target resource field feedback index value, and the corresponding HARQ feedback state is determined as the HARQ feedback state of the target HARQ process. In a case where the HARQ feedback state corresponding to the target resource field feedback index value is an HARQ disabled state, it is determined that the HARQ feedback state of the target HARQ process is the HARQ disabled state. In a case where the HARQ feedback state corresponding to the target resource field feedback index value is an HARQ enabled state, it is determined that the HARQ feedback state of the target HARQ process is the HARQ enabled state.

In some implementations, after the target resource field feedback index value carried in the target information field is determined, the first mapping table between the resource field feedback index values and the HARQ feedback states is looked up to obtain an HARQ feedback state corresponding to the target resource field feedback index value, and the corresponding HARQ feedback state is determined as the HARQ feedback state of the target HARQ process.

In the embodiments of the disclosure, the target resource field feedback index value carried in the DCI may be reused to indicate the HARQ feedback state of the target HARQ process to the terminal. In a case where the HARQ feedback state of the target HARQ process is an HARQ disabled state, the terminal no longer performs any HARQ feedback for the PDSCH transmission using the target HARQ process, which may reduce the probability of occurrence of the HARQ stalling, thus improving a transmission rate of the terminal.

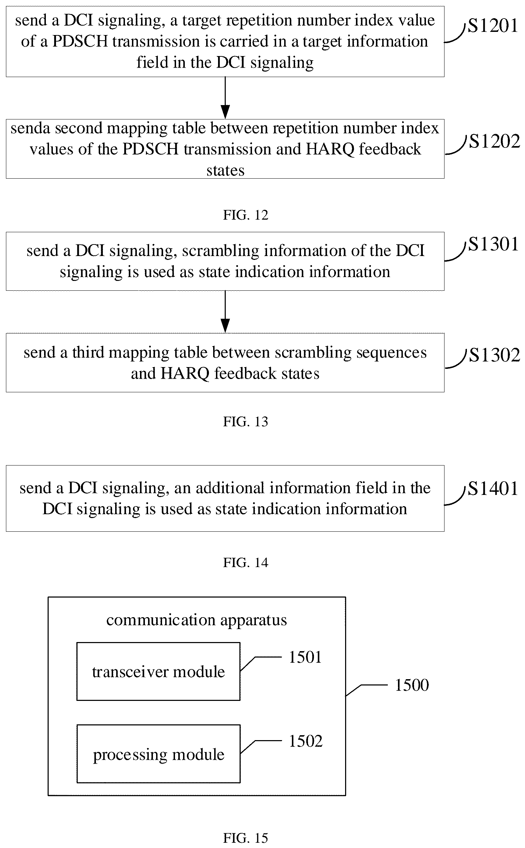

Please refer to FIG. 12, which is a flowchart illustrating a method for indicating disabling an HARQ feedback according to the embodiments of the disclosure. The method for indicating disabling an HARQ feedback may be performed by a network device. As illustrated in FIG. 12, the method may include but is not limited to the following.

At S1201, a DCI signaling is sent, where a target repetition number index value of a PDSCH transmission is carried in a target information field of the DCI signaling.

In some implementations, the repetition number index value carried in the target information field of the DCI signaling is configured to indicate state indication information. In the embodiments of the disclosure, the state indication information is configured to indicate an HARQ feedback state of a target HARQ process to the terminal. It needs to be noted that, in the embodiments of the disclosure, the target HARQ process is an HARQ process used by a scheduled PDSCH transmission.

At S1202, a second mapping table between repetition number index values of the PDSCH transmission and HARQ feedback states is sent.

In some implementations, the network device may send the second mapping table between the repetition number index values of the PDSCH transmission and the HARQ feedback states to the terminal. For example, the network device may send configuration information of the second mapping table to the terminal via an RRC signaling, such that the terminal determines the second mapping table based on the configuration information.

In some implementations, after the target repetition number index value carried by the target information field is determined, the second mapping table between the repetition number index values and the HARQ feedback states is queried to obtain an HARQ feedback state corresponding to the target repetition number index value, and the corresponding HARQ feedback state is determined as the HARQ feedback state of the target HARQ process. In a case where the HARQ feedback state corresponding to the target repetition number index value is an HARQ disabled state, it is determined that the HARQ feedback state of the target HARQ process is the HARQ disabled state. In a case where the HARQ feedback state corresponding to the target repetition number index value is an HARQ enabled state, it is determined that the HARQ feedback state of the target HARQ process is the HARQ enabled state.

In the embodiments of the disclosure, the target repetition number index value carried in the DCI may be reused to indicate the HARQ feedback state of the target HARQ process to the terminal. In a case where the HARQ feedback state of the target HARQ process is an HARQ disabled state, the terminal no longer performs any HARQ feedback for the PDSCH transmission using the target HARQ process, which may reduce the probability of occurrence of the HARQ stalling, thus improving a transmission rate of the terminal.

Please refer to FIG. 13, which is a flowchart illustrating a method for indicating disabling an HARQ feedback according to the embodiments of the disclosure. The method for indicating disabling an HARQ feedback may be performed by a network device. As illustrated in FIG. 13, the method may include but is not limited to the following.

At S1301, a DCI signaling is sent, where scrambling information of the DCI signaling is used as state indication information.

In some implementations, a CRC code of the signaling is scrambled with the scrambling information of the DCI signaling. After the network device sends the DCI signaling to the terminal, the terminal may obtain a target scrambling sequence from the CRC code.

At S1302, a third mapping table between scrambling sequences and HARQ feedback states is sent.

In some implementations, the network device may send the third mapping table between the scrambling sequences and the HARQ feedback states to the terminal. For example, the network device may send configuration information of the third mapping table to the terminal via an RRC signaling, such that the terminal determines the third mapping table based on the configuration information.

After obtaining the target scrambling sequence, the terminal queries the third mapping table to obtain an HARQ feedback state that has a mapping relationship with the target scrambling sequence, to obtain the HARQ feedback state of the target HARQ process.

In the embodiments of the disclosure, the scrambling information of the DCI signaling may be configured to indicate an HARQ feedback state of a target HARQ process to the terminal. In a case where the HARQ feedback state of the target HARQ process is an HARQ disabled state, the terminal no longer performs any HARQ feedback for the PDSCH transmission using the target HARQ process, which may reduce the probability of occurrence of the HARQ stalling, thus improving a transmission rate of the terminal.

Please refer to FIG. 14, which is a flowchart illustrating a method for indicating disabling an HARQ feedback according to the embodiments of the disclosure. The method for indicating disabling an HARQ feedback may be performed by a network device. As illustrated in FIG. 14, the method may include but is not limited to the following.

At S1401, a DCI signaling is sent, where an additional information field in the DCI signaling is used as state indication information.

In some implementations, a new information field may be added to the DCI signaling, and the additional information field may be used as the state indication information.

In some implementations, in a case where the additional information field indicates a first value, it is determined that the HARQ feedback state of the target HARQ process is the HARQ enabled state. In a case where the additional information field indicates a second value, it is determined that the HARQ feedback state of the target HARQ process is the HARQ disabled state. In this implementation, the HARQ feedback state of the target HARQ process may be explicitly indicated to the terminal via the additional information field.

In some implementations, the HARQ feedback state of the target HARQ process may be implicitly determined based on an indication of the additional information field. For example, the indication of the additional information field may be configured to indicate whether to change the HARQ feedback state of the target HARQ process that is indicated at a last time. In the embodiments of the disclosure, the HARQ feedback state of the target HARQ process may be determined based on the indication of the additional information field and the HARQ feedback state of the target HARQ process that is indicated at a last time.

In the embodiments of the disclosure, the additional information field of the DCI signaling may be configured to indicate the HARQ feedback state of the target HARQ process to the terminal. In a case where the HARQ feedback state of the target HARQ process is an HARQ disabled state, the terminal no longer performs any HARQ feedback for the PDSCH transmission using the target HARQ process, which may reduce the probability of occurrence of the HARQ stalling, thus improving a transmission rate of the terminal.

In the embodiments according to the disclosure, the methods in the embodiments of the disclosure are described from perspectives of the network device and the terminal, respectively. To perform functions of the methods according to the above embodiments, the network device and the terminal may include a hardware structure and a software module, and realize the above functions with the hardware structure, the software module, or a combination of the hardware structure and the software module. A specific function may be performed via the hardware structure, the software module, or the hardware structure plus the software module.

Please refer to FIG. 15, which is a block diagram illustrating a communication apparatus 1500 according to the embodiments of the disclosure. The communication apparatus 1500 illustrated in FIG. 15 may include a transceiver module 1501 and a processing module 1502. The transceiver module 1501 may include a sending module and/or a receiving module. The sending module is configured to achieve a sending function, and the receiving module is configured to achieve a receiving function. The transceiver module 1501 may be configured to achieve the sending function and/or the receiving function.

The communication apparatus 1500 may be a network device, a component within a network device, or a device that may be used in combination with a network device. Or the communication device 1500 may be a terminal, a component within a terminal, or a device that may be used in combination with a terminal.

The communication apparatus 1500 may be a terminal, including:
a transceiver module 1501, configured to receive a target signaling; and
a processing module 1502, configured to determine state indication information based on information carried by the target signaling, and to determine an HARQ feedback state of a target HARQ process used by a scheduled PDSCH transmission based on the state indication information.

In some implementations, the transceiver module 1501 is further configured to receive configuration information, where the configuration information is configured to indicate to the terminal a supported target signaling for carrying the state indication information, and the target signaling includes an RRC signaling and/or a DCI signaling.

In some implementations, the state indication information is state configuration information carried by the target signaling, and the processing module 1502 is further configured to determine the HARQ feedback state of the target HARQ process based on the state configuration information carried by the target signaling.

In some implementations, in a case where the state indication information is carried in a target information field of the DCI signaling, the processing module 1502 is further configured to determine the HARQ feedback state of the target HARQ process based on information carried by the target information field.

In some implementations, the processing module 1502 is further configured to determine the HARQ feedback state of the target HARQ process based on a target resource field feedback index value carried by the target information field.

In some implementations, the processing module 1502 is further configured to determine a first mapping table between resource field feedback index values and HARQ feedback states based on a protocol agreement or a network indication; and determine the HARQ feedback state of the target HARQ process based on the target resource field feedback index value and the first mapping table.

In some implementations, the processing module 1502 is further configured to determine the HARQ feedback state of the target HARQ process based on a target repetition number index value of a PDSCH transmission carried by the target information field.

In some implementations, the processing module 1502 is further configured to determine a second mapping table between repetition numbers of the PDSCH transmission and HARQ feedback states based on a protocol agreement or a network indication; and determine the HARQ feedback state of the target HARQ process based on the target repetition number index value and the second mapping table.

In some implementations, in a case where the HARQ feedback state of the target HARQ process is an HARQ enabled state, the processing module 1502 is further configured to determine a target repetition number of the scheduled PDSCH transmission based on the information carried by the target information field.

In some implementations, the state indication information is scrambling information of the DCI signaling, and the processing module 1502 is further configured to determine the HARQ feedback state of the target HARQ process based on the scrambling information.

In some implementations, the processing module 1502 is further configured to determine a target scrambling sequence of the DCI signaling based on the scrambling information; and determine the HARQ feedback state of the target HARQ process based on the target scrambling sequence and a third mapping table between scrambling sequences and HARQ feedback states.

In some implementations, the state indication information is an additional information field in the DCI signaling, and the processing module 1502 is further configured to determine the HARQ feedback state of the target HARQ process based on the additional information field.

In some implementations, the processing module 1502 is further configured to, in a case where the additional information field indicates a first value, determine that the HARQ feedback state of the target HARQ process is an HARQ enabled state; and in a case where the additional information field indicates a second value, determine that the HARQ feedback state of the target HARQ process is an HARQ disabled state.

In some implementations, the processing module 1502 is further configured to: determine a historical HARQ feedback state of a historical target HARQ process that is indicated at a last time; and determine the HARQ feedback state of the target HARQ process based on the additional information field and the historical HARQ feedback state.

In some implementations, the additional information field indicates whether to change the historical HARQ feedback state, and the processing module 1502 is further configured to, in a case where the additional information field indicates to change the historical HARQ feedback state, determine that the HARQ feedback state of the target HARQ process is opposite to the historical HARQ feedback state; and in a case where the additional information field indicates to not change the historical HARQ feedback state, determine that the HARQ feedback state of the target HARQ process is same as the historical HARQ feedback state.

In some implementations, the processing module 1502 is further configured to, in a case where no historical target HARQ process is present before the target HARQ process, determine a default HARQ feedback state of the terminal as the historical HARQ feedback state.

The communication apparatus 1500 is a network device, including
a transceiver module 1501, configured to send a target signaling, where information carried by the target signaling is used for determining state indication information, and the state indication information is used for determining an HARQ feedback state of a target HARQ process used by a scheduled PDSCH transmission.

In some implementations, the transceiver module 1501 is further configured to send configuration information, where the configuration information is configured to indicate to a terminal a supported target signaling for carrying the state indication information, and the target signaling includes an RRC signaling and/or a DCI signaling.

In some implementations, the transceiver module 1501 is further configured to send the target signaling, where state configuration information carried by the target signaling is used for indicating the state indication information.

In some implementations, the processing module 1502 is further configured to send the DCI signaling, where information carried by a target information field of the DCI signaling is used for indicating the state indication information, and the information carried by the target information field is one of a target resource field feedback index value or a target repetition number index value of a PDSCH transmission.

In some implementations, the transceiver module 1501 is further configured to send a first mapping table between resource field feedback index values and HARQ feedback states.

In some implementations, the transceiver module 1501 is further configured to send a second mapping table between repetition number index values of the PDSCH transmission and HARQ feedback states.

In some implementations, the transceiver module 1501 is further configured to send the DCI signaling, where scrambling information of the DCI signaling is used as the state indication information.

In some implementations, the transceiver module 1501 is further configured to send a third mapping table between scrambling sequences and HARQ feedback states.

In some implementations, the transceiver module 1501 is further configured to send the DCI signaling, where an additional information field of the DCI signaling is used as the state indication information.

In the embodiments of the disclosure, the state indication information may be determined based on the information carried by the target signaling, and the state indication information indicates to the terminal whether to perform the HARQ feedback for the target HARQ process used by the scheduled PDSCH transmission. In a case where the HARQ feedback state of the target HARQ process is an HARQ disabled state, the terminal no longer performs any HARQ feedback for the PDSCH transmission using the target HARQ process, which may reduce the probability of occurrence of the HARQ stalling, thus improving a transmission rate of the terminal.

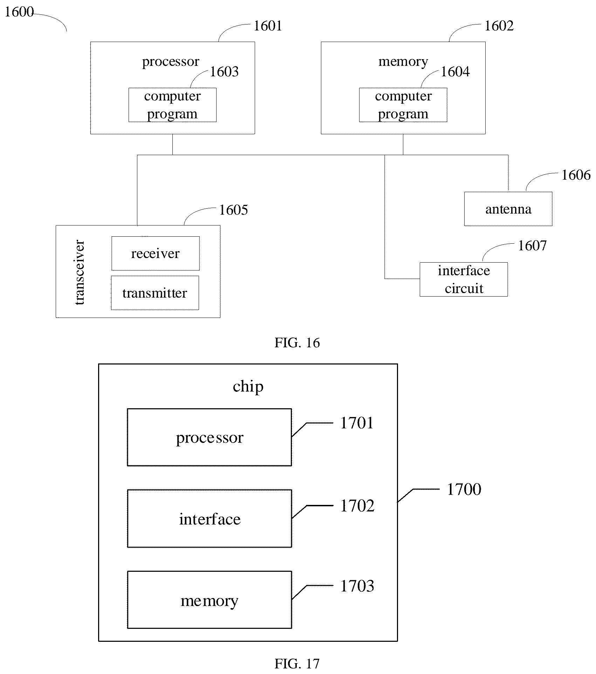

Please refer to FIG. 16, which is a block diagram illustrating another communication device 1600 according to the embodiments of the disclosure. The communication device 1600 may be a network device, or a terminal, or a chip, a chip system, a processor, etc. that supports the network device to implement the method, or a chip, a chip system, a processor, etc. that supports the terminal to implement the method. The device 2000 is configured to implement the method in the above method embodiments. For details, reference may be made to the description in the above method embodiments.

The communication device 1600 may include one or more processors 1601. The processor 1601 may be a general-purpose processor or a special-purpose processor. For example, it may be a baseband processor or a central processing unit. The baseband processor is configured to process communication protocols and communication data, and the central processor is configured to control communication devices (such as base stations, baseband chips, terminals, terminal chips, DU or CU, etc.) to execute computer programs and process computer program data.

For example, the communication device 1600 may also include one or more memories 1602 on which a computer program 1604 is stored. When the computer program 1604 is executed by the processor 1601, the communication device 1600 is caused to implement the methods in the above method embodiments. For example, the memory 1602 may also store data. The communication device 1600 and the memory 1602 may be set separately or integrated together.

For example the communication device 1600 may also include a transceiver 1605 and an antenna 1606. The transceiver 1605 may be called a transceiving unit, a transceiving machine or a transceiving circuit, to achieve a transceiving function. The transceiver 1605 may include a receiver and a transmitter. The receiver may be called a receiver machine or a receiving circuit, to achieve a receiving function; and the transmitter may be called a transmitter machine or a transmitting circuit, to achieve a transmitting function.

For example, the communication device 1600 includes one or more interface circuits 1607. The interface circuit 1607 is configured to receive code instructions and transmit the code instructions to the processor 1601. When the code instructions are running on the processor 1601, the communication device 1600 is caused to implement the methods in the above method embodiments.

In an implementation, the processor 1601 may include a transceiver configured to achieve the receiving and transmitting function. For example, the transceiver may be a transceiver circuit, an interface, or an interface circuit. The transceiving circuit, the interface, or the interface circuit configured to achieve the receiving and transmitting functions may be set separately or integrated together. The transceiver circuit, the interface or the interface circuit may be configured to read and write code/data, or the transceiver circuit, the interface or the interface circuit may be configured to transmit signals.

In an implementation, the processor 1601 may store a computer program 1603. When the computer program 1603 is running on the processor 1601, the communication device 1600 is caused to implement the methods in the above method embodiments. The computer program 1603 may be solidified in the processor 1601. In this way, the processor 1601 may be implemented in hardware.

In an implementation, the communication device 1600 may include a circuit that may achieve the transmitting or receiving or communicating function in the above method embodiments. The processor and transceiver in the disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication device in the above embodiments may be a network device or a terminal, but the scope of the communication device in the disclosure is not limited to this, and the structure of the communication device may not be restricted by FIG. 16. The communication device may be an independent device or part of a larger device. For example, the communication device may be:
(1) an independent IC, or a chip, or a chip system or a subsystem;
(2) a collection including one or more IC, optionally, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

For the case where the communication device may be a chip or a chip system, please refer to FIG. 17, which is a block diagram illustrating a chip according to the embodiments of the disclosure. The chip in FIG. 17 includes a processor 1701 and an interface 1702. There may be one or more processors 1701, and there may be one or more interfaces 1702.

For example, the chip further includes a memory 1703 for storing necessary computer programs and data.

In some implementations, the chip may be used to implement functions of the terminal in the embodiments of the disclosure, including:
an interface 1702, configured to receive a target signaling; and
a processor 1701, configured to determine state indication information based on information carried by the target signaling, and to determine an HARQ feedback state of a target HARQ process used by a scheduled PDSCH transmission based on the state indication information.

In some implementations, the interface 1702 is further configured to receive configuration information, where the configuration information is configured to indicate to the terminal a supported target signaling for carrying the state indication information, and the target signaling includes an RRC signaling and/or a DCI signaling.

In some implementations, the state indication information is state configuration information carried by the target signaling, and the processor 1701 is further configured to determine the HARQ feedback state of the target HARQ process based on the state configuration information carried by the target signaling.

In some implementations, in a case where the state indication information is carried in a target information field of the DCI signaling, the processor 1701 is further configured to determine the HARQ feedback state of the target HARQ process based on information carried by the target information field.

In some implementations, the processor 1701 is further configured to determine the HARQ feedback state of the target HARQ process based on a target resource field feedback index value carried by the target information field.

In some implementations, the processor 1701 is further configured to determine a first mapping table between resource field feedback index values and HARQ feedback states based on a protocol agreement or a network indication; and determine the HARQ feedback state of the target HARQ process based on the target resource field feedback index value and the first mapping table.

In some implementations, the processor 1701 is further configured to determine the HARQ feedback state of the target HARQ process based on a target repetition number index value of a PDSCH transmission carried by the target information field.

In some implementations, the processor 1701 is further configured to determine a second mapping table between repetition numbers of the PDSCH transmission and HARQ feedback states based on a protocol agreement or a network indication; and determine the HARQ feedback state of the target HARQ process based on the target repetition number index value and the second mapping table.

In some implementations, in a case where the HARQ feedback state of the target HARQ process is an enabled state, the processor 1701 is further configured to determine a target repetition number of the scheduled PDSCH transmission based on the information carried by the target information field.

In some implementations, the state indication information is scrambling information of the DCI signaling, and the processor 1701 is further configured to determine the HARQ feedback state of the target HARQ process based on the scrambling information.

In some implementations, the processor 1701 is further configured to determine a target scrambling sequence of the DCI signaling based on the scrambling information; and determine the HARQ feedback state of the target HARQ process based on the target scrambling sequence and a third mapping table between scrambling sequences and HARQ feedback states.

In some implementations, the state indication information is an additional information field in the DCI signaling, and the processor 1701 is further configured to determine the HARQ feedback state of the target HARQ process based on the additional information field.

In some implementations, the processor 1701 is further configured to, in a case where the additional information field indicates a first value, determine that the HARQ feedback state of the target HARQ process is an HARQ enabled state; and in a case where the additional information field indicates a second value, determine that the HARQ feedback state of the target HARQ process is an HARQ disabled state.

In some implementations, the processor 1701 is further configured to determine a historical HARQ feedback state of a historical target HARQ process that is indicated at a last time; and determine the HARQ feedback state of the target HARQ process based on the additional information field and the historical HARQ feedback state.

In some implementations, the additional information field is configured to indicate whether to change the historical HARQ feedback state, and the processor 1701 is further configured to: in a case where the additional information field indicates to change the historical HARQ feedback state, determine that the HARQ feedback state of the target HARQ process is opposite to the historical HARQ feedback state; and in a case where the additional information field indicates to not change the historical HARQ feedback state, determine that the HARQ feedback state of the target HARQ process is same as the historical HARQ feedback state.

In some implementations, the processor 1701 is further configured to, in a case where no historical target HARQ process is present before the target HARQ process, determine a default HARQ feedback state of the terminal as the historical HARQ feedback state.

In some implementations, the chip may be configured to implement functions of the network device in the embodiments of the present disclosure, including:

an interface 1702, configured to send a target signaling, where information carried by the target signaling is used for determining state indication information, and the state indication information is used for determining an HARQ feedback state of a target HARQ process used by a scheduled PDSCH transmission.

In some implementations, the interface 1702 is further configured to send configuration information, where the configuration information is configured to indicate to a terminal a supported target signaling for carrying the state indication information, and the target signaling includes at least one of: an RRC signaling, an MAC CE signaling, or a DCI signaling.

In some implementations, the interface 1702 is further configured to send the target signaling, where state configuration information carried by the target signaling is used for indicating the state indication information.

In some implementations, the interface 1702 is further configured to send the DCI signaling, where information carried by a target information field of the DCI signaling is configured to indicate the state indication information, and the information carried by the target information field is one of: a target resource field feedback index value or a target repetition number index value of a PDSCH transmission.

In some implementations, the interface 1702 is further configured to send a first mapping table between resource field feedback index values and HARQ feedback states.

In some implementations, the interface 1702 is further configured to send a second mapping table between repetition number index values of the PDSCH transmission and HARQ feedback states.

In some implementations, the interface 1702 is further configured to send the DCI signaling, where scrambling information of the DCI signaling is used as the state indication information.

In some implementations, the interface 1702 is further configured to send a third mapping table between scrambling sequences and HARQ feedback states.

In some implementations, the interface 1702 is further configured to send the DCI signaling, where an additional information field of the DCI signaling is used as the state indication information.

In the embodiments of the disclosure, the state indication information may be determined based on the information carried by the target signaling, and the state indication information indicates to the terminal whether the HARQ feedback is performed for the target HARQ process used by the scheduled PDSCH transmission. In a case where the HARQ feedback state of the target HARQ process is an HARQ disabled state, the terminal no longer performs any HARQ feedback for the PDSCH transmission using the target HARQ process, which may reduce the probability of occurrence of the HARQ stalling, thus improving a transmission rate of the terminal.

Those skilled in the art may also understand that the various illustrative logical blocks and steps listed in the embodiments of the disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the disclosure.

The embodiments of the disclosure also provide a system for indicating disabling an HARQ feedback. The system includes a communication device as a network device and a communication device as a terminal in the above embodiments in FIG. 16. Or the system includes a communication device as a network device and a communication device as a terminal in the above embodiments in FIG. 17.

The disclosure also provides a readable storage medium for storing instructions. When the instructions are executed by a computer, functions of any one of the above method embodiments are performed.

The disclosure also provides a computer program product. When the computer program product is executed by a computer, functions of any one of the above method embodiments are performed.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in the disclosure are distinguished merely for convenience of description, and are not intended to limit the scope of embodiments of the disclosure, but also to indicate an order of precedence.

The term "at least one" in the disclosure may also be described as one or more, and the more may be two, three, four, or more, which is not limited in the disclosure. In the embodiment of the disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

Corresponding relationships indicated by tables in the disclosure may be configured or predefined. Values of information in the tables are only examples, and may be configured as other values, which are not limited in the disclosure. When the corresponding relationship between information and parameters is configured, it is not always necessary to configure all corresponding relationships indicated in tables. For example, in the tables of the disclosure, corresponding relationships indicated by some rows may not be configured. For another example, appropriate transformations and adjustments, such as splitting and merging, may be made based on the above tables. Names of parameters shown in headers of the tables may be other names understandable by the communication device, and values or representations of the parameters may be other values or representations understandable by the communication device. When the above tables are implemented, other data structures may be used, for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, in combination with units and algorithm steps of the examples described in embodiments of the disclosure, may be implemented by electronic hardware or a combination of electronic hardware and computer software. Whether the functions are executed by hardware or software depends on a specific application and a design constraint of the technical solutions. Those skilled in the art may adopt different methods for each specific application to implement the described functions, but such implementation should not be considered as going beyond the scope of the disclosure.

Those skilled in the art may clearly understand that for a specific working process of a system, an apparatus and a unit described above reference may be made to a corresponding process in the above method embodiments, which is not be repeated here.

The above are only implementations of the disclosure. However, the protection scope of the disclosure is not limited here. Changes and substitutions that may be easily considered by those skilled in the art shall be included within the protection scope of the disclosure. Therefore, the protection scope of the disclosure shall be subject to the protection scope of claims.

## Claims

1. A method for indicating disabling a hybrid automatic repeat request (HARQ) feedback, performed by a terminal, comprising:
receiving a target signaling, and determining state indication information based on information carried by the target signaling; and
determining an HARQ feedback state of a target HARQ process used by a scheduled physical downlink shared channel (PDSCH) transmission based on the state indication information.

2. The method of claim 1, further comprising:
receiving configuration information, wherein the configuration information indicates to the terminal a supported target signaling for carrying the state indication information, and the target signaling comprises at least one of: a radio resource control (RRC) signaling, a medium-access-control control element (MAC CE) signaling, or a downlink control information (DCI) signaling.

3. The method of claim 2, wherein determining the HARQ feedback state of the target HARQ process used by the scheduled PDSCH transmission based on the state indication information comprises:
the state indication information being state configuration information carried by the target signaling, determining the HARQ feedback state of the target HARQ process based on the state configuration information.

4. The method of claim 2, wherein determining the HARQ feedback state of the target HARQ process used by the scheduled PDSCH transmission based on the state indication information comprises:
in a case where the state indication information is carried in a target information field in the DCI signaling, determining the HARQ feedback state of the target HARQ process based on information carried by the target information field.

5. The method of claim 4, wherein determining the HARQ feedback state of the target HARQ process based on the information carried by the target information field comprises:
determining the HARQ feedback state of the target HARQ process based on a target resource field feedback index value carried by the target information field.

6. The method of claim 5, further comprising:
determining a first mapping table between resource field feedback index values and HARQ feedback states based on a protocol agreement or a network indication; and
determining the HARQ feedback state of the target HARQ process based on the target resource field feedback index value and the first mapping table.

7. The method of claim 4, wherein determining the HARQ feedback state of the target HARQ process based on the information carried by the target information field comprises:
determining the HARQ feedback state of the target HARQ process based on a target repetition number index value of a PDSCH transmission carried by the target information field.

8. The method of claim 7, further comprising:
determining a second mapping table between repetition numbers of the PDSCH transmission and HARQ feedback states based on a protocol agreement or a network indication; and
determining the HARQ feedback state of the target HARQ process based on the target repetition number index value and the second mapping table.

9. The method of claim 5 or 7, further comprising:
in a case where the HARQ feedback state of the target HARQ process is an HARQ enabled state, determining a target repetition number of the scheduled PDSCH transmission based on the information carried by the target information field.

10. The method of claim 1 or 2, wherein determining the HARQ feedback state of the target HARQ process based on the state indication information comprises:
the state indication information being scrambling information of a downlink control information (DCI) signaling, determining the HARQ feedback state of the target HARQ process based on the scrambling information.

11. The method of claim 10, wherein determining the HARQ feedback state of the target HARQ process based on the scrambling information comprises:
determining a target scrambling sequence of the DCI signaling based on the scrambling information; and
determining the HARQ feedback state of the target HARQ process based on the target scrambling sequence and a third mapping table between scrambling sequences and HARQ feedback states.

12. The method of claim 1 or 2, wherein determining the HARQ feedback state of the target HARQ process based on the state indication information comprises:
the state indication information being an additional information field in the DCI signaling, determining the HARQ feedback state of the target HARQ process based on the additional information field.

13. The method of claim 12, wherein determining the HARQ feedback state of the target HARQ process based on an indication in the additional information field comprises:
in a case where the additional information field indicates a first value, determining that the HARQ feedback state of the target HARQ process is an HARQ enabled state; and
in a case where the additional information field indicates a second value, determining that the HARQ feedback state of the target HARQ process is an HARQ disabled state.

14. The method of claim 12, wherein determining the HARQ feedback state of the target HARQ process based on the additional information field comprises:
determining a historical HARQ feedback state of a historical target HARQ process that is indicated at a last time; and
determining the HARQ feedback state of the target HARQ process based on the additional information field and the historical HARQ feedback state.

15. The method of claim 14, wherein the additional information field indicates whether to change the historical HARQ feedback state, and determining the HARQ feedback state of the target HARQ process based on the additional information field and the historical HARQ feedback state comprises:
in a case where the additional information field indicates to change the historical HARQ feedback state, determining that the HARQ feedback state of the target HARQ process is opposite to the historical HARQ feedback state; and
in a case where the additional information field indicates to not change the historical HARQ feedback state, determining that the HARQ feedback state of the target HARQ process is same as the historical HARQ feedback state.

16. The method of claim 14, further comprising:
in a case where no historical target HARQ process is present before the target HARQ process, determining a default HARQ feedback state of the terminal as the historical HARQ feedback state.

17. A method for indicating disabling a hybrid automatic repeat request (HARQ) feedback, performed by a network device, comprising:
sending a target signaling, wherein information carried by the target signaling is used for determining state indication information, and the state indication information is used for determining an HARQ feedback state of a target HARQ process used by a scheduled physical downlink shared channel (PDSCH) transmission.

18. The method of claim 17, further comprising:
sending configuration information, wherein the configuration information indicates to a terminal a supported target signaling for carrying the state indication information, and the target signaling comprises at least one of: a radio resource control (RRC) signaling, a medium-access-control control element (MAC CE) signaling, or a downlink control information (DCI) signaling.

19. The method of claim 18, wherein sending the target signaling comprises:
sending the target signaling, wherein state configuration information carried by the target signaling is used for indicating the state indication information.

20. The method of claim 18, wherein sending the target signaling to the terminal comprises:
sending the DCI signaling, wherein information carried by a target information field in the DCI signaling is used for indicating the state indication information, and the information carried by the target information field is one of: a target resource field feedback index value or a target repetition number index value of a PDSCH transmission.

21. The method of claim 20, further comprising:
sending a first mapping table between resource field feedback index values and HARQ feedback states.

22. The method of claim 20, further comprising:
sending a second mapping table between repetition number index values of the PDSCH transmission and HARQ feedback states.

23. The method of claim 18, wherein sending the target signaling to the terminal comprises:
sending the DCI signaling, wherein scrambling information of the DCI signaling is used as the state indication information.

24. The method of claim 22, comprising:
sending a third mapping table between scrambling sequences and HARQ feedback states.

25. The method of claim 18, wherein sending the target signaling to the terminal comprises:
sending the DCI signaling, wherein an additional information field of the DCI signaling is used as the state indication information.

26. A communication apparatus, comprising:
a transceiver module, configured to receive a target signaling; and
a processing module, configured to determine state indication information based on information carried by the target signaling, and to determine a hybrid automatic repeat request (HARQ) feedback state of a target HARQ process used by a scheduled physical downlink shared channel (PDSCH) transmission based on the state indication information.

27. A communication apparatus, comprising:
a transceiver module, configured to send a target signaling, wherein information carried by the target signaling is used for determining state indication information, and the state indication information is used for determining a hybrid automatic repeat request (HARQ) feedback state of a target HARQ process used by a scheduled physical downlink shared channel (PDSCH) transmission.

28. A communication device, comprising a processor and a memory for storing a computer program, wherein when the processor executes the computer program stored in the memory, the device is caused to implement the method of any one of claims 1 to 16.

29. A communication device, comprising a processor and a memory for storing a computer program, wherein when the processor executes the computer program stored in the memory, the device is caused to implement the method of any one of claims 17 to 25.

30. A communication device, comprising a processor and an interface circuit, wherein
the interface circuit is configured to receive code instructions and transmit the code instructions to the processor; and
the processor is configured to run the code instructions to implement the method of any one of claims 1 to 16.

31. A communication device, comprising a processor and an interface circuit, wherein
the interface circuit is configured to receive code instructions and transmit the code instructions to the processor; and
the processor is configured to run the code instructions to implement the method of any one of claims 17 to 25.

32. A computer-readable storage medium for storing instructions, wherein when the instructions are executed, the method of any one of claims 1 to 16 is implemented.

33. A computer-readable storage medium for storing instructions, wherein when the instructions are executed, the method of any one of claims 17 to 25 is implemented.
